(19) Europäisches Patentamt
European Patent Office
Office européen des brevets

(11) EP 2 106 469 B1

(12) **EUROPEAN PATENT SPECIFICATION**

(45) Date of publication and mention of the grant of the patent:
**09.11.2011 Bulletin 2011/45**

(21) Application number: **07867824.0**

(22) Date of filing: **18.12.2007**

(51) Int Cl.:
***D04H 13/00*** *(2006.01)* ***D04H 1/64*** *(2006.01)*
***C08F 220/06*** *(2006.01)* ***C08K 5/3412*** *(2006.01)*

(86) International application number:
**PCT/US2007/025915**

(87) International publication number:
**WO 2008/088545 (24.07.2008 Gazette 2008/30)**

(54) **EMULSION POLYMER BINDER WITH AZIRIDINE CROSSLINKING AGENT FOR MINERAL FIBER WEBS**

EMULSION-POLYMER-BINDER MIT AZIRIDINVERNETZENDEM MITTEL FÜR MINERALFASERBAHNEN

LIANT POLYMÈRE D'ÉMULSION AVEC UNE AZIRIDINE COMME AGENT DE RÉTICULATION POUR DES NAPPES DE FIBRES MINÉRALES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **19.01.2007 US 655601**

(43) Date of publication of application:
**07.10.2009 Bulletin 2009/41**

(73) Proprietor: **Celanese International Corporation
Dallas, TX 75234-6034 (US)**

(72) Inventors:
- **GOLDSTEIN, Joel, E.
East Brunswick, NJ 08816 (US)**
- **VAN BOXTEL, Hendrikus
NL-6121 NS Born (NL)**
- **PAULS, Steven, P., Sr.
Old Bridge, NJ 08857 (US)**

(74) Representative: **Ackermann, Joachim
Postfach 11 13 26
60048 Frankfurt am Main (DE)**

(56) References cited:
**EP-A- 1 106 724**
**US-A- 4 490 505**
**US-A- 4 563 307**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 106 469 B1

## Description

Technical Field

The present invention relates generically to the use of polymeric binder compositions for the preparation of mineral fiber mats, and more particularly to the use of carboxylated emulsion binder compositions that are crosslinked with a polyfunctional aziridine compound and are substantially formaldehyde free.

Background

Fiberglass and other mineral fiber based products are used as insulation for homes, automobiles, appliances, pipes, ducts and the like. Fiberglass mats are generally produced by bonding a web of glass fibers with a polymeric binder that crosslinks when heated. The polymeric binder enables the glass fibers to adhere to one another and provides strength to the fiberglass mat while allowing it to remain somewhat flexible.

Conventionally, a phenol-formaldehyde polymer was used as the binder in fiberglass or other mineral fiber insulation products. Recently, however, formaldehyde-free binder systems have been developed due to health concerns about formaldehyde emissions in products containing the phenol-formaldehyde resin. Conventional formaldehyde-free binder compositions for glass fibers typically include a polycarboxylic acid, a hydroxyl functional compound, and a curing agent. For example, United States Patent No. 6,331,350 to Taylor et al. describes a formaldehyde-free binder for fiberglass mats which comprises homopolymers or copolymers of carboxylic acids, a polyol compound, and a phosphorous containing accelerator agent. The *Taylor et al.* reference states that it is critical for the pH of the binder to be below about 3.

United States Patent No. 7,067,579 to Taylor et al. describes a similar polycarboxy/polyol binder composition for fiberglass, where the total ratio of hydroxyl groups to carboxylic acid groups is in the range of from about 0.6:1 to 0.8:1. See also, United States Patent Publication Number 2006/0079629 to Taylor *el al.*

United States Patent No. 5,977,232 to Arkens et al. relates to a crosslinkable binder for glass fibers which comprises a carboxylic acid polymer, an active hydrogen compound such as polyols, polyvinyl alcohol, or acrylate resins, and a fluoroborate accelerator agent.

United States Patent Application Publication No. 2005/0059770 to Srinivasan et al. teaches a formaldehyde free binder for fiberglass which includes a polymer with carboxylic acid monomer units and hydroxyl monomer units, and a crosslinking agent which promotes esterification between the carboxylic moieties and the hydroxyl moieties.

Another approach to formaldehyde-free systems is described in United States Patent Application Publication No. 2006/0258248 to Shooshtari et al. which discloses a fiberglass binder composition that includes a multifunctional carboxylic acid or anhydride, epoxidized oils, and optionally, a crosslinking catalyst such as imidazole or tertiary amines.

A particularly significant formaldehyde free binder system is described in United States Patent No. 6,884,849 to Chen et al. The *Chen el al.* reference relates to a formaldehyde free binder composition for glass fibers, where the binder includes a polyvinyl alcohol based resin, a low molecular weight polycarboxylic acid polymer, and a sodium hypophosphite accelerator. Exemplary compositions described in *Chen et al.* include a binder that is a 1:1 mixture of polyvinyl alcohol resin and maleic acid. The binder describe in *Chen et al.* is used by Owens-Coming to produce formaldehyde free fiberglass webs.

While these approaches provide binders with substantially reduced formaldehyde emissions as compared to conventional phenol-formaldehyde binder resins, the above binder systems are cost prohibitive because they require large amounts of expensive components in order to achieve sufficient crosslinking density. For example, the *Chen et al.* reference described above requires a composition of 50 weight percent of maleic anhydride-a high quantity of the more expensive component. Additionally, the prior art binder compositions generally require high curing temperatures (177°C (350°F) or more) which adds additional expense to the system.

Other formaldehyde free crosslinking systems have been used in fields such as cellulosic coatings. For example, triaziridine compounds have been used to crosslink carboxylic acid functionalized polymer binders in cellulosic fabrics. United States Patent No. 6,117,492 to Goldstein et al. relates to formaldehyde-free emulsion binder compositions for nonwoven webs that are adapted to crosslink at low temperatures. The emulsion polymers include acetoacetoxy moieties and carboxylic acid moieties, and are combined with a polyaldehyde crosslinking agent and a polyaziridine crosslinking agent

United States Patent No. 6,506,696 to Goldstein et al. discloses binder compositions for synthetic nonwoven webs where the binder compositions include a polymer with carboxylic acid functionality and acetoacetate functionality. The binder composition is crosslinked with both aziridine compounds and dialdehyde compounds.

Likewise, United States Patent No. 6,426,121 to Goldstein et al. discloses a low temperature crosslinking binder composition for nonwoven webs, where the binder composition includes an emulsion polymer with carboxylic acid functionality and is stabilized with polyvinyl alcohol protective colloids. The binder in *Goldstein et al.* is crosslinked with

both a polyaldehyde compound and a polyaziridine compound.

Binders used in cellulosics or thermoplastic webs are generally substantially different from those used in glass fiber substrates because glass fibers do not have reactive functional groups like cellulose fibers (-OH) or thermoplastic fibers (if treated, -OH). The cellulosic binders described in the above references generally contain difunctional crosslinking systems, which include a hydroxyl functional crosslinker to create crosslinked groups between the functional group on the fiber and the functional group on the binder. See, *e.g.*, the '121 *Goldstein et al.* reference at col. 6, lines 17-24, and co1. 7, lines 49-64. Additionally, the above-described binders which are crosslinked with triazidines have low glass transition temperatures, which are generally not suitable for manufacturing fiberglass insulation products because it causes the fiberglass web to block when it is wound onto a roll.

## Summary of Invention

The present invention relates to the use of cost-effective formaldehyde free binder compositions for the preparation of mineral fibers such as fiberglass, and to the resulting mineral fiber mats, where the binder compositions exhibit comparable or improved strength and flexibility properties as compared to conventional binder systems. The binder composition is derived from crosslinking a polymer which has 0.05 to 50 weight percent of carboxylic acid units (based on total monomer weight), with a polyfunctional aziridine crosslinking agent

Further features and advantages of the present invention will become apparent from the discussion that follows.

## Detailed Description

The present invention is described in detail below with reference to the various examples. Modifications to particular examples within the scope of the present invention, set forth in the appended claims, will be readily apparent to those of skill in the art.

Unless otherwise indicated, terms are to be construed in accordance with their ordinary meaning. Percent, for example, refers to weight percent, unless context indicates otherwise. Following are some exemplary definitions of terms used in this specification and the appended claims.

"Parts per hundred weight resin," or "pphr" is defined herein as the weight of a component per 100 units weight of the polymer dispersion solids, *i.e.,* actives on actives.

"Film insolubles" relates to the crosslinking properties of a binder composition and is measured as described in the examples below. That is, an approximately 6 mil film is formed by pouring the binder composition into a mold, air drying for about 16 hours, and thermally curing it for the time and temperature specified. A sample of the film is then refluxed in the specified solvent for 2 hours, the solvent is evaporated, and the residual weight is measured and used to calculate the percent film insolubles. The film insolubles level of a composition generally correlates to the crosslinking ability of the binder, *i.e.*, higher film insolubles indicates greater crosslinking density.

"Mineral fibers" and like terminology means and includes fibers made from minerals or metal oxides such as fiberglass, rock wool, ceramic fibers and the like whether naturally occurring or synthetic. These materials are typically in the form of a mat or web prior to application of the binder and may be used in connection with insulation and fiber mats/tissues/veils for flooring and roofing applications.

The mineral fiber binder composition used in accordance with the invention includes a carboxylic acid functional polymer which is crosslinked with a polyfunctional aziridine agent. The carboxylic acid polymers used in the invention are generally emulsion polymerized resins with a glass transition temperature of at least 20°C, which include carboxylic acid monomer units that are incorporated into the backbone of the polymer, and wherein the emulsion polymer includes monomer units, selected from vinyl-based monomers, styrenic monomer, (meth)acrylic monomers, diene monomers, alpha olefin monomers, and combinations thereof,. The carboxylic acid moieties on the polymer react with the aziridine crosslinking agent to provide a durable binder composition. The binder polymer includes from 0.05 to 50 weight percent carboxylic acid units and preferably from 0.1 to 10 weight percent carboxylic acid units, based on total monomer weight Other suitable ranges for the carboxylic acid monomer amounts include from 0.25 to 5 weight percent acid units, and from 0.25 wt. percent to 2 weight percent.

The choice of carboxylic acid monomers is not particularly limited and may include one or more monomers such as acrylic acid, methacrylic acid, crotonic acid, itaconic acid, and monoesters of dicarboxylic acids such as monoethyl maleate. Dicarboxylic acids are also suitable, including maleic acid, fumaric acid, and aconitic acid. Additionally, for the purposes of this invention, anhydrides of carboxylic acids may be used as the carboxylic acid monomer; an exemplary anhydride is maleic anhydride.

The binder polymer used in the invention includes a minor portion of carboxylic acid monomer units. The balance of ethylenically unsaturated monomer units in the binder resin include vinyl-based monomers including vinyl esters such as vinyl acetate, vinyl ethylene carbonate, vinyl 2-ethylhexanoate, and vinyl versatate; vinyl halides such as vinyl chloride and vinylidene chloride; vinyl benzoate, and N-vinyl formamide; (meth) acrylic monomer units such as butyl acrylate and

methyl methacrylate; styrenic monomer units; dienes such as butadiene; alpha olefins including ethylene and propylene; and any combinations of the preceding.

Typically, the carboxylated emulsion polymer includes resins such as vinyl acetate polymers, vinyl acetate-ethylene polymers, and styrene-butadiene polymers. The use of vinyl acetate based polymers is preferred. Preferably, the emulsion polymer includes at least 50 weight percent vinyl acetate monomer units, and even more preferably at least 90 weight percent.

Additionally, while the polymer is reacted with an aziridine post-crosslinking agent to create crosslinking moieties, it may be desirable to include a small amount (0.05 to 0.5 wt. percent, based on total monomer weight) of polymerizable precrosslinking monomer units in the binder polymer. Suitable precrosslinking monomers include diallyl phthalate, tiriallyl cyanurate, hexamethylene diacrylate or the like.

In a particularly preferred embodiment of the invention, the binder polymer includes from 0.5 to 5 weight percent of carboxylic acid monomer units, and from 95 to 99.5 weight percent of vinyl acetate monomer units, based on the total monomer weight.

The binder polymer used in the invention is generally emulsion polymerized in an aqueous medium in the presence of stabilizing agents such as emulsifiers, surfactants, protective colloids, or combinations thereof.

It is known that the polyfunctional aziridine crosslinking agents may also form crosslinking moieties with hydroxyl functional components, which are present, for example, in polyvinyl alcohol (PVOH) protective colloids. In preferred embodiments of the invention, however, the binder polymer is substantially free of polyvinyl alcohol protective colloids, *i.e.*, less than about 0.3 pphr. The presence of PVOH colloids increases the viscosity of the emulsion, thus requiring a low-solids product, or requiring dilution prior to application to the fibers. Additionally, it has been discovered in connection with the present invention, that the presence of hydroxyl-functional colloids may actually reduce the overall crosslinking effectiveness because the aziridine crosslinking agent is reacting with ungrafted components.

The use of surfactant-only stabilized resins in the invention enables the production of high solids emulsions which is desirable from a cost perspective. The emulsions may be prepared at a solids content of from about 25 to about 70 weight percent, and more typically from about 40 to 60 weight percent. The binder resin is usually applied to the glass or mineral fibers in aqueous emulsion form; however, the polymer may be added to the fibers in any form which is suitable to the particular manufacturing process used. The surfactant-stabilizing system used in some embodiments of the invention may be substantially free of alkylphenol ethoxylate (APE) surfactants. APE-type surfactants are suspected of being linked to human health issues, and in particular are discouraged or banned in European markets.

The polymer component in the binder used in accordance with the invention may have a higher glass transition temperature than conventional resins used with aziridine crosslinkers. Low glass transition temperature resins are not preferred for use as a binder in fiberglass insulation, because the bonded fiberglass mats are wound onto rolls while the mat is still warm. Accordingly, if the binder composition is excessively tacky, the fiberglass roll will block and the layers in the roll will adhere to each other. Generally, the emulsion polymer in the invention has a glass transition temperature of at least 20°C, and more preferably at least 35°C. A suitable range of glass transition temperatures is from 25°C to 100°C. For example, polyvinyl acetate polymers usually have a Tg in the range of from about 28°C to about 40°C. It may be preferable to use an even higher glass transition temperature which may be accomplished by, for example, copolymerizing vinyl acetate with higher Tg monomers such as vinyl versatate (particularly VeoVa 9), vinyl benzoate, N-vinyl formamide, methyl methacrylate, vinyl ethylene carbonate or other higher Tg monomers. Binder polymers with glass transition temperatures of from 40°C to 80°C or from 50°C-75°C may be preferred in some processes. In any event, if used in fiberglass insulation applications, the cured binder composition should be substantially block resistant.

The aziridine post-crosslinking agent which is included in the binder composition used in accordance with the invention is operative to form crosslinking moieties between carboxylic acid groups on the binder polymer, thus making the resin more durable. The post-crosslinking agent is generally added to the aqueous binder composition prior to applying the composition to the glass or mineral fiber mat. The crosslinking reaction initiates when the composition dries, either by air-drying or heating. Where vinyl acetate based polymers are used, the aziridine crosslinking agent is typically added to the binder polymer within 4 hours prior to application of the binder to the glass fibers because the activity of the aziridine agent is degraded over time in the presence of water.

The polyfunctional aziridine crosslinking agents have at least two aziridine functional groups, and preferably have at least three aziridine functional groups. The aziridine functional groups have the following general structure, or are derived wherefrom:

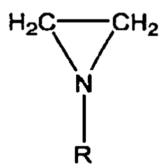

In the above formula, one or both of the $CH_2$ moieties on the aziridines functional group may be substituted, for example, with methyl or alkyl groups.

A variety of polyfunctional aziridine compounds are suitable to crosslink the carboxylic acid moieties in the inventive binders. Typically, the aziridine compounds include from 3 to 5 nitrogen atoms per molecule. Examples include N-(aminoalkyl) aziridines such as N-aminoethyl-N-aziridilethylamine, N, N-bis-2-aminopropyl-N-aziridilethylamine, and N-3,6,9-triazanonylaziridine.

Preferred crosslinking agents include bis and tris aziridines of di and tri acrylates of alkoxylated polyols, including the trisaziridine of the triacrylate of the adduct of glycerine and propylene oxide; the tris aziridine of the triacrylate of the adduct of trimethylolpropone and ethylene oxide; and the tris aziridine of the triacrylate of the adduct of pentaerythritol and propylene oxide. Especially preferred polyfunctional aziridine crosslinking agents are the triazirdine compounds with structures corresponding to I and II, below:

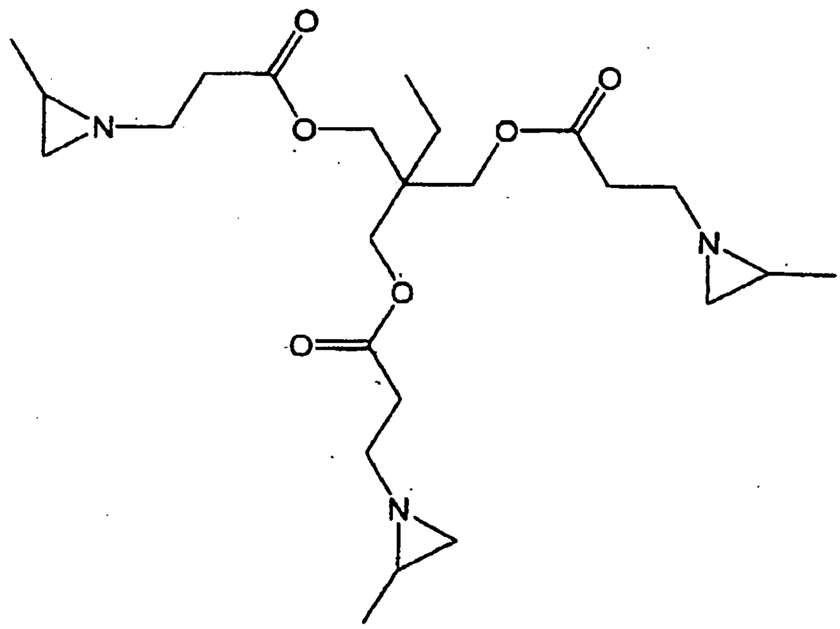

(I)

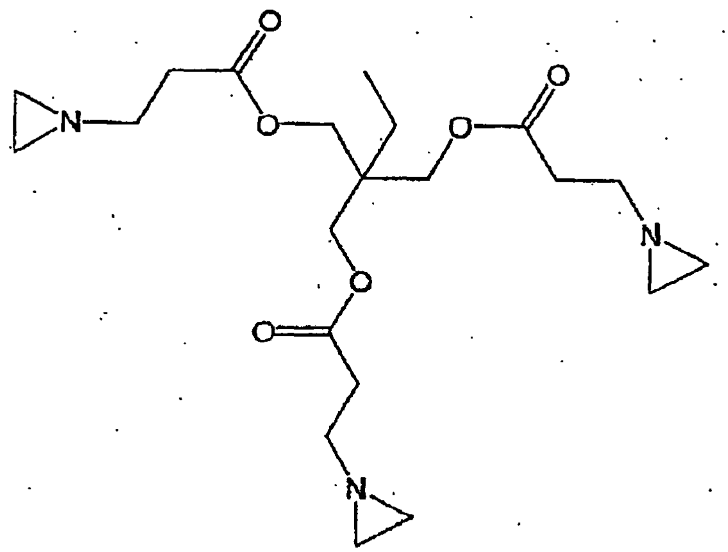

(II)

Crosslinking agents with the above formulas are commercially available as NEOCRYL CX-100® from DSM

(structure I), and as XAMA 7® from Bayer Material Science (structure II). Additional polyfunctional aziridine compounds are disclosed in United States Patent No. 4,278,578 to Carpenter, and United States Patent No. 4,605,698 to Briden.

It has been discovered according to the present invention that the trisaziridine crosslinking agent performs best in conjunction with carboxylic acid functional groups, and that difunctional crosslinking activity is not needed to achieve good crosslinking properties. Accordingly, the binder polymer does not require hydroxyl functional compounds such as polyols, nor does it need hydroxyl crosslinking agents such as polyaldehydes. In this regard, it is noted that difunctional hydroxyl crosslinking agents (*e.g.* glyoxal) are added in cellulosic or sythentic thermoplastic webs to provide crosslinking moieties between the substrate and the binder polymer to provide water resistance to the web. For example, glyoxal will react with hydroxyl groups on the cellulose web or synthetic web (if corona treated) and any hydroxyl groups in the binder. The glass and mineral fiber substrates that are the focus of the present invention, in contrast, generally do not have hydroxyl functional groups on the fibers. Accordingly, the presence of hydroxyl crosslinking agents only adds to the overall cost of the system without enhancing performance of the binder. Preferably, the binder polymer used in the invention is substantially free of polyaldehyde crosslinking agents, *e.g.*, less than about 0.3 pphr.

In addition to the necessary components of the crosslinked binder composition discussed above, the binder compositions may also optionally contain various additives such as plasticizers, biocides, fillers, thickening agents, detackifying agents, anti-foaming agents, UV stabilizers, lubricants, release agents, pigments, opacifiers, dyes, as well as any other known additives in the polymer arts.

As mentioned, the polymers are generally prepared and applied as emulsions. While emulsion resins are typically prepared in an acidic aqueous environment (pH of less than about 4), it has been discovered in connection with the present invention that if the pH of the emulsion is raised prior to adding the aziridine crosslinking agent, the binder exhibits improved stability. For instance, when the crosslinking agent is added to a very acidic emulsion polymer, the composition becomes rubbery over a time period of a few hours or so. Suitably, the pH of the binder composition is raised to between 5 and 9 and more preferably to between 6.5 and 8.5. Surprisingly, raising the pH of the binder composition also appears to improve the crosslinking ability of the composition.

To prepare the fiberglass insulation material, matted glass fibers are bonded together by a cured polymeric material. Generally, molten streams of glass are drawn into fibers of random lengths and blown into a forming chamber where they are randomly deposited as a mat onto a traveling conveyor. Other fibers may also be incorporated into the mat such as cellulose fibers, cellulose derivatives, thermoplastic fibers, or the like. Additionally, other components such as mineral fillers may be incorporated into the mat. The polymeric binder composition may be applied to the fibers while they are in transit to the forming chamber and while still hot from the drawing operation. The binder composition is typically applied by spraying.

The residual heat from the glass fibers and the flow of air through the fibrous mat during the forming operation volatilizes some of the water from the binder, thereby leaving the remaining components of the binder on the fibers as a viscous or semi-viscous high solids liquid. The polymer binder tends to accumulate at the junctions where fibers cross each other; to hold the fibers together at these points. The coated fibrous mat is transferred to a curing oven where heated air is blown through the mat to cure the binder and rigidly bond the glass fibers together. Alternatively, the coated fibrous mat may be allowed to air dry. After the binder composition is cured, the bonded webs are immediately transferred to rolls.

Other methods of making fiberglass mats are suitable as well. The fiber mats may also be formed by wet-laid processes where the glass fibers are slurried in water, and the web is formed by dewatering the slurry. In processes such as these, the emulsion binders may be added to the glass fibers after the web is dewatered.

Methods of making bonded fiberglass mats are well known in the art, and any suitable technique may be used in connection with the present invention. Various processes for making fiberglass mats are described in United States Patent No. 5,614,132 to Bakhshi et al., United States Patent No. 5,883,020 to Bargo et al., United States Patent No. 6,923,883 to Kissell et al., United States Patent Application Publication No. 2006/0019024 to Freeman et al., and United States Patent Application Publication No. 2006/0009569 to Charbonneau et al.

The bonded fiberglass webs made according ω the invention are useful in thermal insulation and acoustic insulation applications, and also may be formed into a fabric that is heat resistant and corrosion resistant.

The following examples are presented to further illustrate and explain the present invention and should not be taken as limiting in any regard.

## EXAMPLES

In the following examples, the crosslinking ability of different binder compositions was evaluated by measuring the film insolubles level of films cast from the polymer compositions. To measure film insolubles, the binder samples are poured into molds which are sized to produce dried films having a thickness of approximately 6 mil. The mixture is allowed to air dry (approx. 20°C) for approximately 16 hours. The dried film is then cured at the specified time and temperature. A sample of the film (approx. 0.5 g) is weighted and placed in an Erlenmeyer flask. 100 ml of solvent

(usually dimethyl formamide, acetone, or toluene) is added via a volumetric flask and the film is refluxed for two (2) hours. The solvent is then cooled and filtered through Whatman #4 Qualitative Filter Paper. Using volumetric pipettes, 10 ml of the solute is added to a tared aluminum pan (done in duplicate). The solvent is then evaporated in an oven and the pan is re-weighed to determine the residue weight (solubilized portion of the polymer). The percent insolubles is calculated as follows (averages used as applicable):

$$\% \text{ Insolubles} = \left[1 - \left(\frac{\text{Residual Weight} \times 10}{\text{Initial Film Weight}}\right)\right] \times 100$$

High insolubles content indicates a higher crosslinking density.

Comparative Data: Non-aziridine binder systems

The following comparative binder system was measured for film insolubles in dimethyl formamide. The polymer in the following example represents the formaldehyde free binder system developed by Owens-Corning, and is a widely used formaldehyde free binder formulation for glass fibers.

| Polymer | Composition |
|---|---|
| A | 1:1 ratio of partially hydrolyzed polyvinyl alcohol and maleic acid. |

| Polymer | Crosslinker | Additive Amount (wt. %) | Curing Temp. (°C (°F)) | Curing Time (min) | Insolubles in DMF (%) |
|---|---|---|---|---|---|
| A | - | - | 163 (325) | 3 | 73.7 |

As can be seen, the Owens Corning binder exhibits very good crosslinking density. However, the use of 50 weight percent of maleic acid is undesirable from a cost perspective, as it is by far the most expensive component in that binder system. A cheaper, formaldehyde-free binder system with comparative crosslinking ability to polymer A is needed.

Carboxylated Emulsion Resins with Crosslinking agents

In the following examples, the effect of using various crosslinking agents on carboxylated binder resins was measured. The aqueous latexes were measured for insolubles at a pH of about 4.5 in the presence of various crosslinking agents, and also without crosslinkers. The following crosslinking agents are used in these examples:

| Crosslinker | Composition |
|---|---|
| CX-100 | NEOCRYL CX-100® trisazirdine compound available from DSM and corresponding to structure (I), above. |
| Epoxy A | EPI-REZ™ Resin 3515-W-60 bisphenol A epoxy dispersion available from Hexion Specialty Chemicals. |
| Epoxy B | EPI-REZ™ 5003-W-55 multifunctional epoxy dispersion, available from Hexion Specialty Chemicals. |
| Epikure | EPIKURE™ 3125 phenol-free modified, Mannich based epoxy crosslinker available from Hexion Specialty Chemicals. |
| Bayhydur | BAYHYDUR XP-7165 water dispersible polyisocyanate based on hexamethylene diisocyante, available from Bayer Material Science. |

The latex components used in the following examples are outlined below:

| Polymer | Composition |
|---|---|
| B | Vinyl acetate emulsion polymer with 0.5 wt. percent of acrylic acid monomer units. The polymer is surfactant stabilized and is polymerized in the presence of a chain transfer agent (mercapto ethanol). |

(continued)

| Polymer | Composition |
|---|---|
| C | Vinyl acetate emulsion polymer with 0.5 wt. percent of acrylic acid monomer units. The polymer is surfactant stabilized and does not include a chain transfer agent. |
| D | Polyvinyl acetate emulsion homopolymer with 1 wt. percent acrylic acid stabilized with polyvinyl alcohol colloids. |
| E | APE surfactant-stabilized polyvinyl acetate with 0.5 wt. % monoethyl maleate monomer units |

The polymers in the examples were dispersed in water and, where applicable, a crosslinking additive was added to the aqueous composition in the weight percent listed (based on the polymer solids). The compositions were then poured into film moldings, dried, cured, and then tested for film insolubles, as described in greater detail above.

Polymer B in DMF

| Latex | Additive | Additive Amount (wt. %) | Curing Temp. (°C (°F)) | Curing Time (min) | Insolubles in DMF (%) |
|---|---|---|---|---|---|
| B | - | - | 163(325) | 3 | 13.8 |
| B | CX-100 | 1.5 | 163 (325) | 3 | 46.6 |

Polymer C in DMF

| Latex | Additive | Additive Amount (wt. %) | Curing Temp. (°C (°F)) | Curing Time (min) | Insolubles in DMF (%) |
|---|---|---|---|---|---|
| C | - | - | 163(323) | 3 | 4.2 |
| C | CX-100 | 1.5 | 163(325) | 3 | 56.8 |

The data for polymers B and C illustrate that the polyfunctional aziridine crosslinking agent is effective to significantly improve the crosslink density of the carboxylated polymers. The aziridine groups in the crosslinking agent react with the pendant acid moieties on the polymer to form crosslinking groups between adjacent polymer chains. The effectiveness of the aziridine crosslinking agent, as compared to other crosslinking agents, is evident from the following tests of polymer D and polymer E.

Polymer D Acetone

| Latex | Additive | Additive Amount (wt %) | Curing Temp. (°C (°F)) | Curing Time (min) | Insolubles in Acetone (%) |
|---|---|---|---|---|---|
| D | No additive | - | 163 (325) | 3 | 8.1 |
| D | Epoxy A | 2.5 | 38 (100) | 60 | 17.8 |
| D | Epoxy A | 2.5 | 177 (350) | 3 | 11.9 |
| D | Epoxy A | 10 | 38(100) | 60 | 11.9 |
| D | Epoxy A | 10 | 177(350) | 3 | 11.1 |
| D | Epoxy A/Epikure | 2.5/0.5 | 38(100) | 60 | 19.9 |
| D | Epoxy A/Epikure | 10/0.5 | 38(100) | 60 | 16.5 |
| D | Epoxy B/Epikure | 2.5/0.5 | 38 (100) | 60 | 18.4 |
| D | Epoxy B/Fpikure | 10/0.5 | 38 (100) | 60 | 15.9 |
| D | Bayhydur XP7165 | 2.5 | 38(100) | 60 | 19.6 |
| D | Bayhydur XP7165 | 2.5 | 163 (325) | 3 | 18.0 |
| D | Bayhydur XP7165 | 10 | 38(100) | 60 | 58.8 |

(continued)

| Latex | Additive | Additive Amount (wt %) | Curing Temp. (°C (°F)) | Curing Time (min) | Insolubles in Acetone (%) |
|---|---|---|---|---|---|
| D | Bayhydur XP7165 | 10 | 163(325) | 3 | 53.0 |
| D | CX-100 | 2.5 | 38 (100) | 60 | 86.1 |
| D | CX-100 | 2.5 | 163 (325) | 3 | 89.1 |
| D | CX-100 | 10 | 38 (100) | 60 | 90.1 |
| D | CX-100 | 10 | 163(325) | 3 | 93.4 |

Polymer E Acetone

| Latex | Additive | Additive Amount (wt. %) | Curing Temp. (°C (°F)) | Curing Time (min) | Insolubles in Acetone (%) |
|---|---|---|---|---|---|
| E | No additive | - | 163 (325) | 3 | 2.5 |
| E | Epoxy A | 2.5 | 38(100) | 60 | 2.8 |
| E | Epoxy A | 2.5 | 177(350) | 3 | 4.1 |
| E | Epoxy A | 10.0 | 38 (100) | 60 | 6.0 |
| E | Epoxy A | 10.0 | 177 (350) | 3 | 6.6 |
| E | Epoxy B | 2.5 | 38(100) | 60 | 4.7 |
| E | Epoxy B | 2.5 | 177 (350) | 3 | 11.8 |
| E | Epoxy B | 10.0 | 38(100) | 60 | 20.8 |
| E | Epoxy B | 10.0 | 177 (350) | 3 | 23.2 |
| E | Epoxy A/Epikure | 2.5/0.5 | 38(100) | 60 | 0.6 |
| E | Epoxy A/Epikure | 10/0.5 | 38(100) | 60 | 0.5 |
| E | Epoxy B/Epikure | 2.5/0.5 | 38 (100) | 60 | 0.5 |
| E | Epoxy B/Epikure | 10/0.5 | 38 (100) | 60 | 0.8 |
| E | CX-100 | 2.5 | 38 (100) | 60 | 87.5 |
| E | CX-100 | 2.5 | 163 (325) | 3 | 94.1 |
| E | CX-100 | 10 | 38 (100) | 60 | 87.7 |
| E | CX-100 | 10 | 163(325) | 3 | 92.47 |

As can be seen above, the polyfunctional aziridine crosslinking agents are effective to substantially improve the crosslinking density of carboxylated emulsion polymers, even when used in relatively small amounts. Significantly, the use of non-aziridine crosslinkers provide binder compositions which exhibited substantially lower crosslinking densities than resins which were crosslinked with aziridine functional compounds. For example, even when used in amounts of 10 percent, epoxy based and isocyanate based crosslinkers did not achieve a crosslinking density that was even comparable to that achieved by using only 2.5 percent of the aziridine compound. In this regard, the superiority of the aziridine crosslinked system is clear.

It is also interesting to note that polymer D, which is stabilized with polyvinyl alcohol, exhibits slightly inferior crosslinking ability to polymer E which is surfactant stabilized. For example, at 2.5 % crosslinker polymer D exhibits enhanced insolubles by about 78 % while polymer E exhibits an increase in insolubles of about 85 %. Without intending to be bound by theory it is believed that the PVOH interferes somewhat with the carboxylic acid/aziridine reaction, as the hydroxyl group is also reactive with aziridines. Most of the PVOH is not grafted, and thus, reaction between ungrafted chains, or even between a grafted group and an ungrafted group does not provide a comparable level of crosslinking density. The results of polymer D are, however, still considered good.

Still, the use of PVOH stabilized systems are not preferred for most applications (even if used with a carboxylated

resin) because emulsion resins which are stabilized with PVOH colloids have a higher viscosity than similar surfactant-stabilized systems, and may require dilution to make them more processable.

Comparative data: Non-carboxylated Binder systems stabilized with PVOH

In the following comparative examples, non-carboxylated polymers stabilized with polyvinyl alcohol protective colloids were crosslinked with a polyaziridine functional crosslinking agent and tested for film insolubles. These polymers do not contain carboxylic acid units. The hydroxyl groups on the polyvinyl alcohol stabilizer react with the additive to form crosslinking moieties. The first set is tested for insolubles in acetone and the second in DMF.

| Polymer | Composition |
|---|---|
| F | Polyvinyl acetate homopolymer emulsion polymer stabilized with 6% polyvinyl alcohol protective colloids. |
| G | Polyvinyl acetate homopolymer emulsion polymer stabilized with 5 % polyvinyl alcohol protective colloids. |

The polymers in the examples were dispersed in water and, where applicable, a crosslinking additive was added to the aqueous composition in the weight percent listed (based on the polymer solids). The compositions were then poured into film moldings, dried, cured, and then tested for film insolubles, as above.

Polymer F with aziridine crosslinker tested in acetone

| Latex | Additive | Additive Amount (wt. %) | Curing Temp. (°C (°F)) | Curing Time (min) | Insolubles in Acetone (%) |
|---|---|---|---|---|---|
| **F** | No additive | - | 163 (325) | 3 | 60.2 |
| **F** | CX-100 | 2.5 | 38(100) | 60 | 63.9 |
| **F** | CX-100 | 2.5 | 163(325) | 3 | 79.4 |
| **F** | CX-100 | 10 | 38 (100) | 60 | 81.5 |
| **F** | CX-100 | 10 | 163(325) | 3 | 74.9 |

Polymer G with aziridine crosslinker tested in DMF

| Latex | Additive | Additive Amount (wt. %) | Curing Temp. (°C (°F)) | Curing Time (min) | Insolubles in DMF (%) |
|---|---|---|---|---|---|
| G | No additive | - | 163(325) | 3 | 1.1 |
| G | CX-100 | 1.5 | 163 (325) | 3 | 2.9 |
| G | CX-100 | 2.0 | 163 (325) | 3 | 3.2 |

In the first table, the insolubles data for polymer F is artificially high because the PVOH renders the polymer somewhat insoluble in acetone, even without crosslinking moieties. Without any additive, for instance, the polymer had an insolubles content of 60.2 %. The addition of crosslinker did not impart significant improvements to the binder. The effect of aziridine crosslinker on non-carboxylated resins is more clearly seen with respect to Polymer G which was tested in a stronger solvent and has a similar composition to polymer F. The presence of aziridine crosslinking agent provided only a small improvement in film insolubles content.

Compare polymers G and F with polymer E above. The presence of aziridine in polymer F (uncarboxylated) provided an increase in film insolubles of about 15-20 percent (absolute increase, i.e., 74.9 %-60.2 % equals an absolute increase of 14.7 percent). The presence of aziridine in polymer G, which is also not carboxylated, was effective to increase the insolubles content by only one or two percent, Polymer E (carboxylated), in contrast, exhibited an increase in film insolubles of 80 percent or more with the addition of aziridine crosslinking agent. Furthermore, even modest improvements in the non-carboxylated binders required significant amounts of crosslinking agent, which increases the overall expense of the system. The presence of carboxylic acid groups in the binder polymer is, therefore, crucial to the operability of the present invention.

Carboxylated vinyl acetate based binders with aziridine crosslinker

In the following examples, various vinyl acetate based polymers were treated at a pH of 6 with the polyfunctional aziridine crosslinking agent (NeoCryl CX-100), and measured for film insolubles in DMF. The latexes used have the following components.

| Polymer | Composition |
|---|---|
| E | Same as above. APE surfactant-stabilized polyvinyl acetate with 0.5 wt. % monoethyl maleate monomer units. |
| H | Same as "E" but not stabilized with APE surfactants. |
| I | Same as "E" but instead of APE surfactant, Disponsil surfactant is used. |
| J | Same as "I" but polymer further includes 0.1 wt. % of diallyl phthalate precrosslinking monomer. |
| K | APE free, surfactant-stabilized polyvinyl acetate with 0.5 wt. % of maleic anhydride monomer units. |
| L | APE free, surfactant-stabilized polyvinyl acetate with 0.5 wt. % of acrylic acid monomer units. |
| M | Same as "L" but polymer further includes 0.1 wt. % of diallyl phthalate precrosslinking monomer. |
| N | APE free, surfactant-stabilized polyvinyl acetate with 0.5 wt. % of maleic anhydride monomer units, and 0.1 wt. % diallyl phthalate precrosslinking monomer. |

The polymer binder compositions were prepared as described above, and tested for film insolubles.

Vinyl acetate based latexes with aziridine crosslinker

| Latex | Additive | Additive Amount (wt. %) | Curing Temp. (°C (°F)) | Curing Time (min) | Insolubles in DMF (%) |
|---|---|---|---|---|---|
| E | CX-100 | 1.5 | 163(325) | 3 | 57.7 |
| E | CX-100 | 2.0 | 163 (325) | 3 | 52.6 |
| H | CX-100 | 1.5 | 163 (325) | 3 | 51.3 |
| H | CX-100 | 2.0 | 163 (325) | 3 | 52.6 |
| I | CX-100 | 1.5 | 163(325) | 3 | 48.4 |
| I | CX-100 | 2.0 | 163(325) | 3 | 46.8 |
| J | CX-100 | 1.5 | 163 (325) | 3 | 54.1 |
| J | CX-100 | 2.0 | 163 (325) | 3 | 50.9 |
| K | CX-100 | 1.5 | 163(325) | 3 | 4.6 |
| K | CX-100 | 2.0 | 163 (325) | 3 | 37.2 |
| L | CX-100 | 1.5 | 163 (325) | 3 | 79.9 |
| L | CX-100 | 2.0 | 163 (325) | 3 | 68.9 |
| M | CX-100 | 1.5 | 163 (325) | 3 | 73.3 |
| M | CX-100 | 2.0 | 163 (325) | 3 | 80.9 |
| N | CX-100 | 1.5 | 163 (325) | 3 | 32.4 |
| N | CX-100 | 2.0 | 163(325) | 3 | 32.9 |

The above data demonstrates that formaldehyde free binder compositions can be fabricated which exhibit comparable crosslinking properties to prior art technology at a fraction of the cost. Compare, for example, latex A (Owens-Coming), with latex L or M of the invention. Similar crosslinking densities are achieved using only 0.5 wt. % of the more expensive carboxylic acid component, as opposed to 50 wt. % carboxylic acid as is required in the formulation of comparative latex A.

Other carboxylic acid-functional latex systems using aziridine crosslinker

In the following examples, a carboxylated styrene-butadiene latex and a carboxylated vinyl acetate-ethylene polymer were tested for crosslinking properties using the CX-100 trisaziridine crosslinking agent. The following emulsions were used in the examples.

| Polymer | Components |
|---|---|
| O | Dow SBR CP620NA styrene-butadiene latex which includes a low level of carboxylic acid monomer units. |
| P | Vinyl Acetate/Ethylene emulsion copolymer with 2.8 wt. % carboxylic acid monomer units. |

The polymer binder compositions were prepared as described above, and tested for film insolubles.

| **Latex** | **Additive** | **Additive Amount (wt. %)** | **Curing Temp. (°C (°F))** | **Curing Time (min)** | **Solvent** | **Insolubles (°/4)** |
|---|---|---|---|---|---|---|
| O | - | - | 163 (325) | 3 | DMF | **82.3** |
| O | CX-100 | 1.5 | 163 (325) | 3 | DMF | **89.6** |
| O | - | - | 163 (325) | 3 | Toluene | **89.5** |
| O | CX-100 | 1.5 | 163 (325) | 3 | Toluene | **96.6** |
| P | - | - | 163 (325) | 3 | DMF | **29.5** |
| P | CX-100 | 1.5 | 163 (325) | 3 | DMF | **62.7** |

The insolubles content in the SBR is somewhat inflated in the above data because SBR is inherently insoluble in most solvents (note the insolubles content without crosslinkers); however, the use of the trisaziridine crosslinking agent did improve the insolubles as compared to an SBR rubber without crosslinking agent. Moreover, it was observed in the above examples that the SBR which was reacted with aziridine crosslinking agents had markedly less surface tackiness than the SBR polymer which was not reacted with aziridine additive. Thus, the use of the polyfunctional aziridine compound may enable the use of a carboxylated SBR binder system that would otherwise be infeasible due to excessive blocking of the tacky polymer. The use of SBR systems would be highly desirable because they are extremely cost competitive.

The invention may also be used with carboxylated VAE resins which exhibited good crosslinking density. Accordingly, the aziridine crosslinking system is useful in connection with a wide variety of carboxylated polymers.

High pH Emulsion Binders

In the following examples the effect of the pH of the aqueous binder composition on the crosslinking density was measured. In the following examples, the samples with a pH of 7.7 were prepared by adding ammonium hydroxide to the aqueous emulsion prior to addition of the crosslinking agent, until the desired pH was reached.

The latex in the following examples is the same formulation used in latex C above, which is a surfactant stabilized vinyl acetate polymer with 0.5 wt. % acrylic acid (same as above).

| **Latex** | **Latex pH** | **Additive** | **Additive Amount (wt. %)** | **Curing Temp. (°C (°F))** | **Curing Time (min)** | **insolubles in DMF (%)** |
|---|---|---|---|---|---|---|
| C | 3.5-4 | CX-100 | 1.5 | 163 (325) | 3 | 56.8 |
| C | 7.7 | CX-100 | 1.5 | RT | Until dry | 80 |
| C | 7.7 | CX-100 | 1.5 | 163(325) | 3 | 78.1 |

Surprisingly, raising the pH of the emulsion resins resulted in a significantly higher crosslinking density than using the more acidic latex, even when air-dried. Additionally, it had previously been observed that when crosslinking agents were added to the acidic latex, the composition became rubbery over time, and made the emulsion difficult to process. This problem was not experienced when the pH of the latex was raised.

## Claims

1. Use of an aqueous binder composition for the preparation of mineral fiber webs, wherein said binder composition includes:

   a) an emulsion polymer having from 0.05 to 50 weight percent of carboxylic acid monomer units based on the total monomer weight, wherein the emulsion polymer has a glass transition temperature of at least 20 °C and wherein the emulsion polymer includes monomer units selected from vinyl-based monomers, styrenic monomers, (meth) acrylic monomers, diene monomers, alpha olefin monomers, and combinations thereof;
   b) a polyfunctional aziridine crosslinking agent; and
   c) water.

2. The use of an aqueous binder composition according to Claim 1, wherein the emulsion polymer is surfactant-stabilized.

3. The use of an aqueous binder composition according to Claim 1, wherein the emulsion polymer is substantially free of protective colloids, preferably substantially free of polyvinyl alcohol protective colloids.

4. The use of an aqueous binder composition according to Claim 1, wherein the binder composition has a pH in the range of from 5 to 9, preferably a pH in the range of from 7 to 8.5.

5. The use of an aqueous binder composition according to Claim 1, wherein the emulsion polymer has a glass transition temperature of from 30 °C to 100 °C, preferably a glass transition temperature of from 40 °C to 80 °C.

6. The use of an aqueous binder composition according to Claim 1, wherein the emulsion polymer includes from 0.1 to 10, preferably 0.25 to 5 weight percent of carboxylic acid monomer units, based on the total monomer weight.

7. The use of an aqueous binder composition according to Claim 1, wherein the carboxylic acid monomer units are selected from the group consisting of acrylic acid, methacrylic acid, maleic anhydride, maleic acid, and monoesters of maleic acid.

8. The use of an aqueous binder composition according to Claim 1, wherein the carboxylic acid monomer units include acrylic acid.

9. The use of an aqueous binder composition according to Claim 1 wherein the emulsion polymer includes at least 50 weight percent of vinyl-based monomer units, which are preferably selected from the group consisting of vinyl acetate, vinyl versatate, vinyl ethylene carbonate, vinyl chloride, vinylidene chloride, N-vinyl formamide, vinyl benzoate, and combinations thereof, in particular includes at least 90 weight percent of vinyl acetate monomer units, based on the total monomer weight.

10. The use of an aqueous binder composition according to Claim 1, wherein the binder composition includes from 0.5 to 5 pphr of polyfunctional aziridine crosslinking agent.

11. The use of an aqueous binder composition according to Claim 1 wherein the polyfunctional aziridine crosslinking agent includes trisaziridine compounds.

12. The use of an aqueous binder composition according to Claim 1, wherein the emulsion polymer further includes from 0.01 to 1 wt. percent of a precrosslinking monomer, based on the total monomer weight.

13. The use of an aqueous binder composition according to Claim 1, wherein the binder composition has a solids content in the range of from 40 to 70 percent.

14. The use of an aqueous binder composition according to Claim 1, wherein the aqueous binder composition is substantially free of polyaldehyde crosslinking agents.

15. The use of an aqueous binder composition according to Claim 1, wherein the emulsion polymer is selected from the group consisting of vinyl acetate polymers, vinyl acetate-ethylene polymers, and styrene-butadiene polymers.

**16.** A mineral fiber mat which comprises the reaction product of the binder composition according to one of the claims 1 to 15.

**17.** A method for producing a mineral fiber mat bonded with polymeric binder, said method including the steps of:

a) forming a web of mineral fibers;
b) applying an aqueous binder composition to the glass fiber web, where the aqueous binder composition has a pH in the range of from 6 to 9 and includes

i) an emulsion polymerized synthetic resin having carboxylic acid monomer units, and
ii) a polyfunctional aziridine crosslinking agent,
and

c) subsequently drying the mineral fiber web to cure the binder composition.

**18.** The method according to Claim 17, wherein the emulsion polymer is polymerized in an aqueous medium at a pH of less than 4.

## Patentansprüche

**1.** Verwendung einer wässrigen Bindemittelzusammensetzung zur Herstellung von Mineralfaservliesen, wobei die Bindemittelzusammensetzung

a) ein Emulsionspolymer mit 0,05 bis 50 Gewichtsprozent Carbonsäure-Monomereinheiten, bezogen auf das Gesamtmonomerengewicht, wobei das Emulsionspolymer eine Glasübergangstemperatur von mindestens 20°C aufweist und wobei das Emulsionspolymer unter Vinylmonomeren, Styrolmonomeren, (Meth)acrylmonomeren, Dienmonomeren, alpha-Olefin-Monomeren und Kombinationen davon ausgewählte Monomereinheiten enthält;
b) einen polyfunktionellen Aziridin-Vernetzer und
c) Wasser
enthält.

**2.** Verwendung einer wässrigen Bindemittelzusammensetzung nach Anspruch 1, wobei das Emulsionspolymer tensidstabilisiert ist.

**3.** Verwendung einer wässrigen Bindemittelzusammensetzung nach Anspruch 1, wobei das Emulsionspolymer weitgehend frei von Schutzkolloiden und vorzugsweise weitgehend frei von Polyvinylalkohol-Schutzkolloiden ist.

**4.** Verwendung einer wässrigen Bindemittelzusammensetzung nach Anspruch 1, wobei die Bindemittelzusammensetzung einen pH-Wert im Bereich von 5 bis 9 und vorzugsweise einen pH-Wert im Bereich von 7 bis 8,5 aufweist.

**5.** Verwendung einer wässrigen Bindemittelzusammensetzung nach Anspruch 1, wobei das Emulsionspolymer eine Glasübergangstemperatur von 30°C bis 100°C und vorzugsweise eine Glasübergangstemperatur von 40°C bis 80°C aufweist.

**6.** Verwendung einer wässrigen Bindemittelzusammensetzung nach Anspruch 1, wobei das Emulsionspolymer 0,1 bis 10 Gewichtsprozent und vorzugsweise 0,25 bis 5 Gewichtsprozent Carbonsäure-Monomereinheiten, bezogen auf das Gesamtmonomerengewicht, enthält.

**7.** Verwendung einer wässrigen Bindemittelzusammensetzung nach Anspruch 1, wobei die Carbonsäure-Monomereinheiten aus der Gruppe bestehend aus Acrylsäure, Methacrylsäure, Maleinsäureanhydrid, Maleinsäure und Monoestern von Maleinsäure ausgewählt sind.

**8.** Verwendung einer wässrigen Bindemittelzusammensetzung nach Anspruch 1, wobei die Carbonsäure-Monomereinheiten Acrylsäure umfassen.

**9.** Verwendung einer wässrigen Bindemittelzusammensetzung nach Anspruch 1, wobei das Emulsionspolymer mindestens 50 Gewichtsprozent Vinyl-Monomereinheiten enthält, die vorzugsweise aus der Gruppe bestehend aus Vinylacetat, Vinylversatat, Vinylethylencarbonat, Vinylchlorid, Vinylidenchlorid, N-Vinylformamid, Vinylbenzoat und Kombinationen davon ausgewählt sind, und insbesondere mindestens 90 Gewichtsprozent Vinylacetat-Monomereinheiten, bezogen auf das Gesamtmonomerengewicht, enthält.

**10.** Verwendung einer wässrigen Bindemittelzusammensetzung nach Anspruch 1, wobei die Bindemittelzusammensetzung 0,5 bis 5 pphr polyfunktionellen Aziridin-Vernetzer enthält.

**11.** Verwendung einer wässrigen Bindemittelzusammensetzung nach Anspruch 1, wobei der polyfunktionelle Aziridin-Vernetzer Trisaziridinverbindungen umfassen.

**12.** Verwendung einer wässrigen Bindemittelzusammensetzung nach Anspruch 1, wobei das Emulsionspolymer ferner 0,01 bis 1 Gewichtsprozent eines Vorvernetzungsmonomers enthält.

**13.** Verwendung einer wässrigen Bindemittelzusammensetzung nach Anspruch 1, wobei die Bindemittelzusammensetzung einen Feststoffgehalt im Bereich von 40 bis 70 Prozent aufweist.

**14.** Verwendung einer wässrigen Bindemittelzusammensetzung nach Anspruch 1, wobei die wässrige Bindemittelzusammensetzung weitgehend frei von Polyaldehyd-Vernetzern ist.

**15.** Verwendung einer wässrigen Bindemittelzusammensetzung nach Anspruch 1, wobei das Emulsionspolymer aus der Gruppe bestehend aus Vinylacetatpolymeren, Vinylacetat-Ethylen-Polymeren und Styrol-Butadien-Polymeren ausgewählt ist.

**16.** Mineralfasermatte, die das Reaktionsprodukt der Bindemittelzusammensetzung nach einem der Ansprüche 1 bis 15 umfasst.

**17.** Verfahren zur Herstellung einer mit polymerem Bindemittel gebundenen Mineralfasermatte, bei dem man:

a) ein Vlies von Mineralfasern bildet;
b) auf das Glasfaservlies eine wässrige Bindemittelzusammensetzung aufbringt, wobei die wässrige Bindemittelzusammensetzung einen pH-Wert im Bereich von 6 bis 9 aufweist und

i) ein emulsionspolymerisiertes Kunstharz mit Carbonsäure-Monomereinheiten und
ii) einen polyfunktionellen Aziridin-Venetzer enthält, und

c) danach das Mineralfaservlies zur Härtung der Bindemittelzusammensetzung trocknet.

**18.** Verfahren nach Anspruch 17, bei dem man das Emulsionspolymer in einem wässrigen Medium bei einem pH-Wert von weniger als 4 polymerisiert.

**Revendications**

**1.** Utilisation d'une composition aqueuse de liant pour la préparation d'un tissu formé de fibres minérales, dans lequel ladite composition de liant comprend:

a) un polymère en émulsion ayant de 0,05 à 50 % en poids de motifs de monomères d'acide carboxylique exprimés basé sur le poids total de monomère, dans lequel le polymère en émulsion présente une température de transition vitreuse d'au moins 20°C et dans lequel le polymère en émulsion comprend des motifs monomères choisis parmi les monomères à base de vinyl, monomères styrèniques, monomères (méth)acryliques, monomères diéniques, monomères alpha oléfiniques et leurs combinaisons;
b) un agent de réticulation à base d'aziridine fonctionnelle; et
c) eau.

**2.** L'utilisation d'une composition aqueuse de liant selon la revendication 1, dans laquelle le polymère en émulsion est un agent surfactant-stabilisé.

**3.** L'utilisation d'une composition aqueuse de liant selon la revendication 1, dans laquelle le polymère en émulsion est substantiellement exempt de colloïdes protecteurs, de préférence substantiellement exempt de colloïdes protecteurs d'alcool polyvinylique.

**4.** L'utilisation d'une composition aqueuse de liant selon la revendication 1, dans laquelle la composition de liant a un pH de l'ordre de 5 à 9, de préférence un pH de l'ordre de 7 à 8,5.

**5.** L'utilisation d'une composition aqueuse de liant selon la revendication 1, dans laquelle le polymère en émulsion a une température de transition vitreuse allant de 30°C à 100°C, de préférence une température de transition vitreuse allant de 40°C à 80°C.

**6.** L'utilisation d'une composition aqueuse de liant selon la revendication 1, dans laquelle le polymère en émulsion comprend de 0,1 à 10, de préférence 0,25 à 5% en poids de motifs de monomères d'acide carboxylique, basé sur le poids total de monomère.

**7.** L'utilisation d'une composition aqueuse de liant selon la revendication 1, dans laquelle les motifs de monomères d'acide carboxylique sont sélectionnés parmi le groupe comprenant l'acide acrylique, l'acide méthacrylique, l'anhydride maléique, l'acide maléique et les monoesters d'acide maléique.

**8.** L'utilisation d'une composition aqueuse de liant selon la revendication 1, dans laquelle les motifs de monomères d'acide carboxylique comprennent de l'acide acrylique.

**9.** L'utilisation d'une composition aqueuse de liant selon la revendication 1, dans laquelle le polymère en émulsion comprend au moins 50% en poids de monomères à base de vinyl, qui sont de préférence sélectionnés parmi le groupe consistant en l'acétate de vinyle, le versatate de vinyle, le carbonate de vinyl-éthylène, le chlorure de vinyl, le chlorure de vinylidène, le N-vinyl formamide, le benzoate de vinyl et leurs combinassions, en particulier comprend au moins 90% en poids d'motifs de monomères d'acétate de vinyle, basé sur le poids total de monomère.

**10.** L'utilisation d'une composition aqueuse de liant selon la revendication 1, dans laquelle la composition de liant comprend de 0,5 à 5 pphr d'agent de réticulation à base d'aziridine fonctionnelle.

**11.** L'utilisation d'une composition aqueuse de liant selon la revendication 1, dans laquelle l'agent de réticulation à base d'aziridine fonctionnelle inclut des composés de trizaridine.

**12.** L'utilisation d'une composition aqueuse de liant selon la revendication 1, dans laquelle le polymère en émulsion comprend en outre de 0,1 à 1 % en poids d'un monomère de pré réticulation, basé sur le poids total de monomère.

**13.** L'utilisation d'une composition aqueuse de liant selon la revendication 1, dans laquelle la composition de liant a une teneur en solides de l'ordre de 40 à 70%.

**14.** L'utilisation d'une composition aqueuse de liant selon la revendication 1, dans laquelle la composition aqueuse de liant est substantiellement exempte d'agents de réticulation poly aldéhydiques.

**15.** L'utilisation d'une composition aqueuse de liant selon la revendication 1, dans laquelle le polymère en émulsion est sélectionné parmi le groupe consistant en les polymères d'acétate de vinyl, les polymères d'éthylène-acétate de vinyl et les polymères de butadiène/styrène.

**16.** Un mat de fibres minérales qui comprend le produit de réaction de la composition de liant selon l'une des revendications 1 à 15.

**17.** Une méthode de production d'un mat de fibres minérales liées avec un liant polymère, ladite méthode incluant les étapes:

a) de formation d'un tissu de fibres minérales ;
b) d'application d'une composition d'un liant aqueuse au tissu formé de fibres de verre, où la composition aqueuse de liant a un pH de l'ordre de 6 à 9 et comprend

i) une résine synthétique polymérisée en émulsion ayant des motifs monomères d'acide carboxylique

ii) un agent de réticulation à base d'aziridine polyfonctionnelle, et

c) ensuite le séchage du tissu formé de fibres minérales pour durcir la composition de liant.

**18.** La méthode selon la revendication 17, dans laquelle le polymère en émulsion est polymérisé dans un milieu aqueux à un pH inférieur à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6331350 B, Taylor
- US 7067579 B, Taylor
- US 20060079629 A, Taylor
- US 5977232 A, Arkens
- US 20050059770 A, Srinivasan
- US 20060258248 A, Shooshtari
- US 6884849 B, Chen
- US 6117492 A, Goldstein
- US 6506696 B, Goldstein
- US 6426121 B, Goldstein
- US 4278578 A, Carpenter
- US 4605698 A, Briden
- US 5614132 A, Bakhshi
- US 5883020 A, Bargo
- US 6923883 B, Kissell
- US 20060019024 A, Freeman
- US 20060009569 A, Charbonneau